(19)

Europäisches
Patentamt
European
Patent Office
Office européen
des brevets

(11) **EP 1 299 962 B1**

(12) **EUROPEAN PATENT SPECIFICATION**

(45) Date of publication and mention
of the grant of the patent:
**09.06.2010 Bulletin 2010/23**

(21) Application number: **01947787.6**

(22) Date of filing: **28.06.2001**

(51) Int Cl.:
**H04B 7/005** (2006.01)

(86) International application number:
**PCT/IT2001/000344**

(87) International publication number:
**WO 2002/005436 (17.01.2002 Gazette 2002/03)**

(54) **METHOD FOR TRANSMITTING SIGNALS IN COMMUNICATION NETWORKS AND ASSOCIATED SYSTEM**

VERFAHREN ZUR ÜBERTRAGUNG VON SIGNALEN IN KOMMUNIKATIONSNETZWERKEN UND ENTSPRECHENDES SYSTEM

PROCEDE DE TRANSMISSION DE SIGNAUX DANS DES RESEAUX DE COMMUNICATION, ET SYSTEME ASSOCIE

(84) Designated Contracting States:
**AT BE CH CY DE DK ES FI FR GB GR IE IT LI LU MC NL PT SE TR**

(30) Priority: **11.07.2000 IT TO000694**

(43) Date of publication of application:
**09.04.2003 Bulletin 2003/15**

(73) Proprietor: **Telecom Italia S.p.A.**
**20123 Milano (IT)**

(72) Inventor: **GREGO, Giorgio,**
**c/o Telecom Italia Lab S.P.A.**
**I-10148 Torino (IT)**

(74) Representative: **Battipede, Francesco et al**
**Telecom Italia S.p.A.**
**Piazza L. Einaudi, 8**
**20124 MIlano (IT)**

(56) References cited:
**EP-A- 0 887 974     WO-A-98/56119**
**US-A- 5 926 768**

• SEUNGWON CHOI ET AL: "PERFORMANCE ANALYSIS OF ADAPTIVE EQUALIZER IN A MOBILE FREQUENCY-SELECTIVE FADING CHANNEL" PERSONAL COMMUNICATION - FREEDOM THROUGH WIRELESS TECHNOLOGY. SECAUCUS, NJ., MAY 18 - 20, 1993, PROCEEDINGS OF THE VEHICULAR TECHNOLOGY CONFERENCE, NEW YORK, IEEE, US, vol. CONF. 43, 18 May 1993 (1993-05-18), pages 645-648, XP000393265 ISBN: 0-7803-1267-8

Printed by Jouve, 75001 PARIS (FR)

**Description**

**Technical Field**

The present invention relates to communication networks, and was developed with particular attention to possible use in mobile communication networks.

**Background Art**

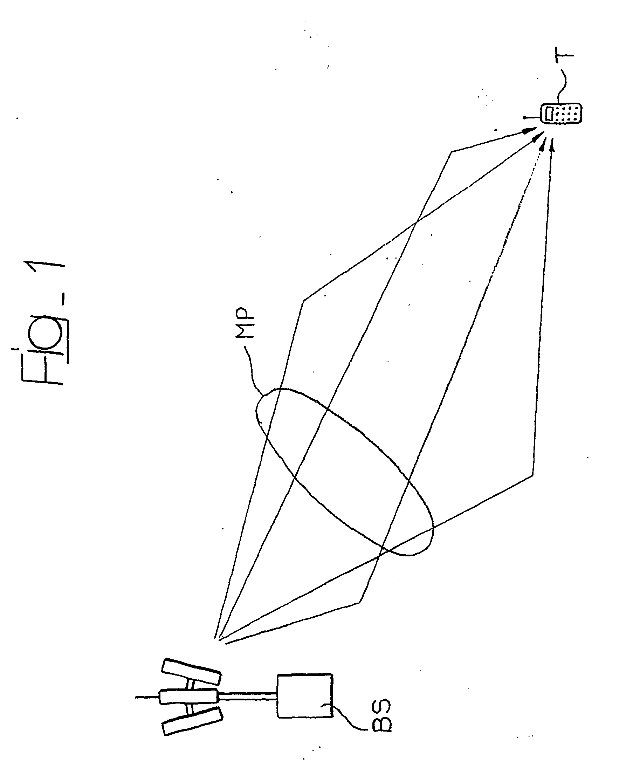

In this application context, one of the major problems associated with the propagation and correct reception of signals, particularly in urban areas, is connected with the formation of multiple propagation paths (multipaths or MPs) as shown schematically in Figure 1, which refers to communication between a base station BS and a mobile terminal T.

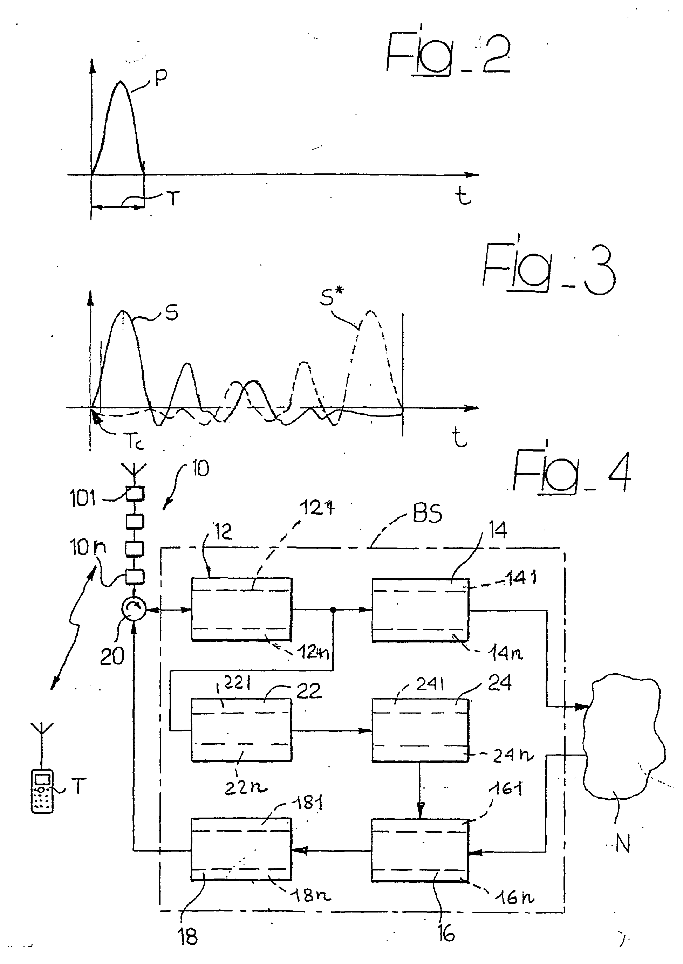

This phenomenon (which also arises in communication between a mobile terminal T and base station BS) is linked to a further group of phenomena (including wave reflection from obstacles such as buildings, etc.) and takes place essentially because of the fact that a signal transmitted with a pulse waveform (see signal P shown in Figure 2) is received in the form of a signal S of complex form as represented qualitatively by the solid-line curve in Figure 3. The phenomenon interferes markedly with the transmission of digital signals, especially as regards their decoding.

For this reason, a large number of techniques for coping with this phenomenon have been developed over the years. Some of these techniques are currently used in mobile telecommunication networks.

Though multipath interference occurs both during transmission from base stations to mobile receivers and during transmission in the opposite direction, the possibilities for implementing signal processing techniques designed to counter the effects of this phenomenon differ widely according to whether we deal with a base station or with a mobile terminal.

The base station, in fact, is a fixed installation which serves a plurality of users, and can thus employ fairly sophisticated means for signal processing without particular limitations in terms of space, power consumption, and so forth.

The mobile terminal, by contrast, must be portable, and manufacturers strive continuously to reduce its size. Precisely for this reason, there are intrinsic limits to the sophistication of the signal processing techniques that the mobile terminal can use.

In principle, at least, it would be possible to compensate for some of the problems associated with multipath either by using more directional links, or by providing geographical coverage through a finer cell structure.

All other considerations aside, however, these solutions come up against the fact that putting them into practice would entail - indirectly, at least - locating mobile terminals, and thus their users, geographically: an approach which is not likely to be acceptable for privacy reasons.

US 5,926,768 discloses a method of optimizing radio communication between a fixed base station having a plurality of antennas and a mobile station by applying, in the base station, processing to all signals $S_i(t)$ received or transmitted via each of the antennas so as to determine corresponding corrected signals given by the convolution product of $h_i(-t)$ and $s_i(t)$, where $h_i(-t)$ is an approximation to the time reversal of the impulse response $h_i(t)$ between antenna and the mobile station. According to the solution disclosed in this document, a computer at the base station determines an approximation to the impulse response $h_i(-t)$ on the basis of values that are derived from the reception at the base station antennas of runs of monochromatic signals (monochromatic signals followed by modulated signals, in some embodiments) that are transmitted, e.g. once every minute, by the mobile station.

**Disclosure of the Invention**

The object of the present invention is thus to provide a solution to the problems associated with interference phenomena such as multipath, without having to track mobile terminals more precisely or necessarily divide geographical areas into cells.

In accordance with the present invention, this object is achieved by means of a method having the characteristics detailed in the following claims. The invention also relates to the associated system and, as a separate element, to the associated terminal.

In addition to achieving the object outlined above, the solution contemplated by the invention also makes it possible to reduce (and virtually eliminate) the need to divide geographical areas into cells. This in turn reduces the complexity and the costs involved in deploying and managing the network, as fewer base stations are needed, and likewise reduces bandwidth occupation.

In its essentials, the solution contemplated by the invention is based on the use of techniques whereby a received signal can be retransmitted using phase conjugation.

In optics, for instance (though the principle can be applied in general to any signal which propagates in the form of waves, and in particular in the form of electromagnetic waves), the devices currently known as phase conjugation mirrors are used in a number of contexts.

A general description of the concept of phase conjugation and its potential applications to the propagation of electromagnetic waves can be found, for example, on pages 2 through 11 of "Optical Phase Conjugation" by Robert A. Fisher, Academic Press 1983.

While an ordinary reflecting mirror reverses the component of the propagation vector k normal to its surface, a Phase Conjugation Mirror or PCM can reverse vector k as a whole.

Take, for example, a monochrome electromagnetic field with pulse ω propagating in a direction z, i.e.

$$E_1(\mathbf{r},\ t)\ =\ \psi(\mathbf{r})\ \exp\ [i(\omega t\ -\ kz)]\ +\ c.c. \qquad (1)$$

The effect of a phase conjugation mirror on this electromagnetic field is to produce a conjugated field which can be expressed as

$$E_2(\mathbf{r},\ t)\ =\ f(\mathbf{r})\ \exp\ [i(\omega t\ +\ kz)]\ +\ c.c. \qquad (2)$$

The formulas given above are taken from page 342, Volume 4 of the Laser Handbook edited by M.L. Stitch and M. Bass, North Holland, 1985.

A possible simplified application of the conjugation principles described above consists of the time reversal of a signal in accordance with the principles underlying the operation of the so-called time-reversal mirrors or TRMs.

For a general description of the underlying principles of time-reverse acoustics, see M. Fink, "Time-reverse Acoustics", in Physics Today, 50, No. 3, March 1997 or the article by M. Fink entitled "Acustica a inversione temporale" published on pages 79 through 86 of the March 2000 issue of the weekly "Le Scienze".

The latter article describes an experiment in which ultrasounds were propagated through a so-called forest of parallel steel bars randomly immersed in a tank of water. The wave emitted by a small transducer in the form of a pulse lasting one microsecond was transmitted through the forest of bars towards an array of 96 transducers. The signals received by the transducers were subjected to time reversal and sent back towards the source, propagating backwards across the forest of bars. The wave arriving at the source was then detected by means of a hydrophone. Although the array sent back a signal with a duration of 200 microseconds through the chaotic dispersion produced by the forest, a regenerated pulse lasting approximately one microsecond was measured at the source.

The same article discusses experiments conducted in sea water in which a sound pulse was sent from a departure zone and recorded at a distance up to 30 kilometers by an array of transceivers, where it was distorted because of the refraction and multiple reflections produced by the water's surface and the sea floor. After undergoing time reversal (phase conjugation), the signal was sent back by the array to the target, were it was found to be well focused.

A preferred embodiment of the invention thus makes use of the physical principles described above to reconstruct, at a mobile transmitter in a mobile conjugation network, for example, a signal constituting the most faithful possible replica of the single pulse used for transmission starting from said transmitter.

In addition to overcoming the drawbacks associated with multipath transmission (and specifically those affecting mobile networks in transmission from the base station to the mobile transmitter, which - as we have seen - usually has more limited processing capacity), the preferred embodiment of the invention also provides a significant advantage in terms of communication privacy. The starting pulse, in fact, is reconstructed only at the position occupied by the specific terminal involved, and not in other regions of space. Moreover, pulse reconstruction is accomplished through the physical mechanism of signal propagation, and thus without requiring that the terminal be located in any way - even approximately - by the fixed base station.

At least in virtual terms, the preferred embodiment of the invention makes it possible to dispense with a network of base stations capable of setting up cell-based geographical coverage: the aforesaid mechanism whereby the pulse is reconstructed as a result of transmission using phase conjugation, in fact, is independent of the distance separating the fixed station and the mobile terminal. Naturally, it will still be necessary to make allowances for the losses to which the signal is in any case subject as a result of energy absorption by the medium in which the signal propagates.

**Brief Description of Drawings**

The following description of the invention, which is intended purely by way of example and is not to be construed as limiting, will make reference to the attached drawings, where:

- Figure 1, which has been referred to above, provides a schematic illustration of the multipath propagation mechanism as it occurs in communication starting from a base station and directed towards a mobile terminal (or vice versa) in a mobile communications network,
- Figures 2 and 3, which have likewise been referred to above, illustrate the effect that multipath propagation can have in broadening a signal transmitted in the form of a concentrated pulse P,
- Figure 4 is a block diagram illustrating a possible architecture for implementing the invention at a base station in a mobile radio communication system, and
- Figure 5 is a flow chart representing the possible operating criteria for the block diagram shown in Figure 4.

**Best mode for Carrying Out the Invention**

The base station BS represented in Figure 4 includes an antenna 10 consisting of a plurality of antenna elements 101, ..., 10n. It is thus the type of antenna typically designated as an array antenna or synthetic aperture antenna. Antenna 10 is thus configured to receive signals starting from one or more mobile terminals T while detecting space-time data regarding their propagation.

In particular, each antenna element 101, ..., 10n carries an associated dedicated transceiver.

Specifically, a receiver 12 is provided which, in order to receive signals originating from elements 101,..., 10n of antenna 10, comprises a plurality of groups 121, ..., 12n each of which is dedicated to an associated antenna element 101, ..., 10n. The signals thus received are demodulated in a demodulator 14, which also comprises a plurality of groups or modules 141, ..., 14n, with a view to forwarding these signals to communications network N.

At the same time, the base station comprises a modulator 16 which receives signals starting from network N and proceeds, through a transmitter 18, to transmit said signals to the mobile terminal T via elements 101, ..., 10n of antenna 10.

Both modulator 16 and transmitter 18 comprise a plurality of modules designated respectively 161, ..., 16n and 181, ..., 18n each of which is dedicated to an associated antenna element 101, ..., 10n.

Symbol 20 represents a complex of bidirectional devices (a complex of so-called circulators, for example) which make it possible to use elements 101, ..., 10n of antenna 10 in both reception and transmission.

The shown representation of the base station BS reception chain 12, 14 and transmission chain 16, 18 is deliberately schematic. The elements making up such a station, in fact, are well known, as it is the possibility of using different solutions according to the transmission standards which are adopted.

This applies, for example, to the generation of the signals to be sent to network N starting from the demodulator: these signals, in fact, are obtained from the individual signals handled by groups or modules 141, ..., 14n making up demodulator 14.

In any case, the specific implementation details of base station BS are not in themselves relevant to an understanding of the invention.

One of the significant characteristics of the invention is the fact that the base station BS comprises an analysis block 22 designed to determine the broadening effect undergone by the individual transmission pulse emitted by the mobile transmitter T (primary because of multipath propagation) during transmission to the base station BS.

To permit this analysis, the mobile transmitter T periodically (at a fixed rate, e.g. every millisecond, or in other words whenever the transmitter sends a certain message unit such as a time slot to the base station) emits a fixed coded sequence (probe or sample sequence) including a logic "one" associated with a certain number of "zeros", and preferably associated with a time synchronization sequence. The purpose of this is to ensure that the base station BS, and its analysis block 22 in particular, is ready to analyze the signals corresponding to the aforesaid logic "one" as it is received by the base station BS following interference resulting from propagation.

Specialists in the field will appreciate the fact that, to facilitate an understanding of the invention, this example has been presented in deliberately simplified form, assuming that transmission from the mobile transmitter T to the base station BS takes place with an extremely simple modulation scheme in which a logic "one" corresponds to transmission of a pulse P of the type shown in Figure 2, while the logic "zero" does not correspond to the emission of a signal (non-modulated carrier).

As the experts are well aware, however, the coding methods that can be used to transmit digital signals are practically infinite. This applies in particular to the possibility of transmitting signals positively at both a logic "one" and at a logic "zero".

To return to the simplified example provided by way of illustration, block 22 determines how waveforms S received by the base station BS are configured when the mobile transmitter T sends a pulse such as pulse P shown in Figure 2.

Referring for the sake of simplicity to the action based on the individual electrical signal (viz., examination on the part of each module in block 22 of the associated output signal from receiver 12), the set of data corresponding to analysis typically consists of a sample of the waveform S as represented in Figure 3 and taken with a sufficiently high sampling rate Tc, which is typically selected on the basis of the general criteria governing signal sampling operations (Nyquist's theorem).

The result of this analysis is sent to a further block 24. In block 24, the aforesaid sample sequence is subjected to time reversal, or in other words to a processing operation after which the waveform S represented in Figure 3 is, as it were, reversed in time so that the first samples become the last and vice versa.

Naturally, this time reversal operation is carried out separately on the signals received via antenna elements 101, ..., 10n and the corresponding groups 121, ..., 12n of receiver 1. For this reason, both block 22 and block 24 have a corresponding organization into multiple groups or channels 221, ..., 22n e 241, ..., 24n, each of which deals with a signal received via a corresponding antenna element 101, ..., 10n. The conjugated waveform resulting from the time reversal operation is generally similar to that represented schematically by the dash-line curve and designated as S* in Figure 3.

The phase conjugated waveform S* thus obtained is transferred to modulator 16 in such a way that the base station BS uses this conjugated waveform to transmit the signal corresponding to the logic "one" to terminal T.

It will be appreciated that the aforesaid time reversal operation is carried out separately for each of the aforesaid signals, thus enabling the individual groups or modules 161, ..., 16n and 181, ..., 18n of modulator 16 and of transmitter 18 to use a phase conjugated waveform for transmission to terminal T via the corresponding antenna elements 101, ..., 10n.

During reception at mobile terminal T, this gives rise to a pulse waveform which is a faithful replica of the pulse P which terminal T used previously in transmission.

The receiving elements of mobile terminal T thus perform their reception operation on an extremely "clean" waveform, where the negative effects of multipath propagation have been eliminated by means of the phase conjugation operation carried out at base station BS.

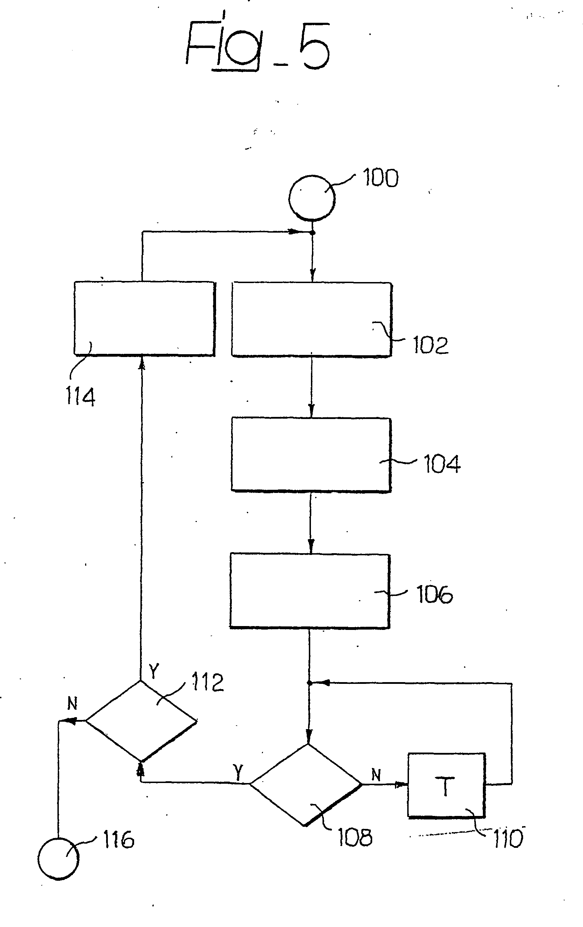

The flow chart in Figure 5 illustrates how the operations described above are carried out.

These operations begin with a starting step designated as 100. At step 102, the base station BS receives the waveform S corresponding (in the simplified example referred to above) to transmission of a logic "one" in a sample sequence emitted by mobile terminal T.

At step 104, the base station BS (and specifically block 24) stores the signal in memory and subsequently performs time reversal (phase conjugation) on it so that it will be available at the moment information must be transmitted to mobile terminal T.

At step 106, block 24 transmits the data obtained as a result of phase conjugation to modulator 16.

From this moment onwards, modulator 16 can use the waveforms corresponding to the phase conjugation operation for transmission to mobile terminal T.

Step 108 is a decision step in which the system determines (on the basis of various criteria which may include simply waiting until a certain block of information has been transmitted) whether it is necessary to update the phase conjugation operation. This operation can be carried out by equipping terminal T with an inertia sensor (the ADXL 202 component produced by Analog Devices, for example) which measures any movements which may have occurred. If movements exceed a certain threshold, the mobile terminal T asks the base station BS to perform updating by sending the sample or probe sequence.

In this connection, it should be borne in mind that the mobile terminal T, precisely because of its mobility, moves relative to base station BS. For any given pulse waveform P used in transmission, the received waveforms will change, for example because of changes in the reflection mechanisms underlying multipath propagation.

If the outcome of step 108 is negative (i.e., updating is not yet required), the system generally goes into a waiting stage and then carries out a further check to determine whether updating is needed.

When it finds that the phase conjugation operation must be updated, the system goes to step 112 to check that it has not been deactivated (e.g., because the call was interrupted) and then returns upstream of step 102. Preferably, this will take place after step 114, in which a signal (originating, for example, from the inertia sensor described above and directed towards mobile terminal T) is emitted in order to inform terminal T that it must transmit the sample sequence again so that the base station can analyze waveform S. A negative outcome to step 112 indicates that the communication has been deactivated, and in this case the system will go to the stop step 116.

It will naturally be appreciated that the criteria on which the preferred embodiment of the invention is based, and which have been described above with specific reference to a situation where phase conjugation is performed at the base station Bs with a view to transmission to mobile terminals T, can likewise be applied to transmission in the opposite direction, providing that mobile terminals T are equipped with an antenna and with a processing capacity such that analysis and phase conjugation operations of the type represented by blocks 22 and 24 in Figure 4 can be carried out.

In this sense, it will be appreciated that the terms "given point" and "terminal" as used in the following claims each apply to both a base station BS (which is in any case a network terminal) and to a terminal T (which, whether it be mobile or fixed, is in any case a given point in the network).

As emphasized above, applying the preferred embodiment of the invention is particularly advantageous in cases where the phase conjugation operation is carried out at the fixed base station with a view to transmission to the mobile terminals T.

The desired effect of reconstructing or reconstituting the transmission pulse, in fact, takes place only at the geographical location of the mobile terminal T involved in each particular instance. A high degree of privacy is guaranteed, both because the pulse waveform is reconstituted only at the mobile terminal concerned (and not at the other terminals in the system), and because reconstitution is accomplished without requiring that the base station BS have information regarding the actual geographical location of the mobile terminal T involved in each particular case.

Naturally, and without detriment to the invention's underlying principle, details and forms of implementation may vary widely with respect to the descriptions and illustrations provided herein, without for that reason failing to fall within the scope of the present invention.

This applies in particular to possible applications in networks where the transmission criteria descried herein are used for transmission between base stations BS and terminals T which are configured, at least in part, as fixed installations (i.e., in households, offices, etc.). In such cases, the phase conjugation operation can be performed even more readily, inasmuch as each fixed terminal is "marked" in a given position, which does not change unless the terminal is transferred elsewhere.

**Claims**

1.  A method for transmitting first digital signals from a given point (BS) to a terminal (T) of a communication network, **characterized in that** it includes the steps of:

    - selectively generating pulse signals starting from said terminal (T), said pulse signals corresponding to a signal used by said terminal (T) to transmit at least one of the logic levels associated with second digital signals to said given point (BS),
    - detecting the waveforms received at said given point (BS) following the emission of said pulse signals,
    - subjecting the waveforms thus detected to phase conjugation in such a way as to generate associated phase conjugated waveforms, and
    - using said phase conjugated waveforms for transmission of the logic levels of the first digital signals from said given point (BS) to said terminal (T).

2.  A method in accordance with claim 1, **characterized in that** said phase conjugated waveforms are obtained starting from said waveforms detected through time reversal.

3.  A method in accordance with any of the foregoing claims, **characterized in that** it includes the step of selectively transmitting probe signals including said pulse signals starting from said terminal (T) to said given point (BS), said probe signals being used to generate updated versions of said phase conjugated waveforms on a case by case basis.

4.  A method in accordance with any of the foregoing claims, **characterized in that** said terminal (T) is a mobile terminal.

5.  A method in accordance with claim 3 or claim 4, **characterized in that** it includes the steps of detecting movement on the part of said mobile terminal (T) and of updating said phase conjugated waveforms when this movement exceeds a given threshold.

6.  A method in accordance with any of the foregoing claims, **characterized in that** it includes the step of detecting said waveforms in said given points by means of a plurality of reception elements (101, ... , 10n).

7.  A system for transmitting first digital signals from a given point (BS) to a terminal (T) in a communications network, in which said terminal (T) is capable of generating pulse signals, said pulse signals corresponding to a signal used by said terminal (T) to transmit at least one of the logic levels associated with second digital signals to said given point (BS), **characterized in that** it includes:

    - A receiver (12) for receiving said pulse signals at said given point (BS),
    - An analysis unit (22) for detecting the waveforms, received by said receiver (12) following the emission of said pulse signals by said terminal (T),
    - A conjugation unit (24) which subjects the waveforms detected by said receiver (12) to phase conjugation in such a way as to generate the associated phase conjugated waveforms, and
    - A transmission chain (16, 18) for transmitting from said given point (BS) to said terminal (T), said transmission chain (16, 18) being configured to use said phase conjugated waveforms for transmission of the logic levels of the first digital signals.

**8.** A system in accordance with claim 7, **characterized in that** said conjugation unit (24) generates said phase conjugated waveforms starting from said waveforms detected by means of time reversal.

**9.** A system in accordance with any of the foregoing claims, **characterized in that** said terminal (T) is configured to selectively transmit probe signals including said pulse signals to said given point (BS); said conjugation unit (24) using said probe signals to generate updated versions of said phase conjugated waveforms on a case by case basis.

**10.** A system in accordance with any of claims 7 through 9, **characterized in that** said terminal (T) is a mobile terminal.

**11.** A system in accordance with claim 9 or with claim 10, **characterized in that** said terminal (T) is associated with a movement sensor to detect movement of said terminal (T), and is configured to transmit said probe signals when this movement exceeds a given threshold.

**12.** A system in accordance with any of the claims 7 through 11, **characterized in that** said receiver (12) includes a plurality of reception elements (101, ... , 10n) for detecting said received waveforms while maintaining space-time data regarding their propagation.

**Patentansprüche**

**1.** Verfahren zum Übertragen erster Digitalsignale von einem gegebenen Punkt (BS) zu einem Endgerät (T) eines Kommunikationsnetzes, **dadurch gekennzeichnet, dass** es die folgenden Schritte beinhaltet:

- selektives Generieren von Impulssignalen, die von dem Endgerät (T) ausgehen, wobei die Impulssignale einem Signal entsprechen, das vom Endgerät (T) verwendet wird, um mindestens einen der logischen Pegel, der zweiten Digitalsignalen zugeordnet ist, zum gegebenen Punkt (BS) zu übertragen,
- Detektieren der Wellenformen, die am gegebenen Punkt (BS), aufdie Abstrahlung der Impulssignale folgend, empfangen werden,
- Unterziehen der so detektierten Wellenformen einer Phasenkonjugation in derartiger Weise, dass zugeordnete phasenkonjugierte Wellenformen generiert werden, und
- Verwenden der phasenkonjugierten Wellenformen zur Übertragung der logischen Pegel der ersten Digitalsignale vom gegebenen Punkt (BS) zum Endgerät (T).

**2.** Verfahren nach Anspruch 1, **dadurch gekennzeichnet, dass** die phasenkonjugierten Wellenformen ausgehend von den detektierten Wellenformen durch Zeitumkehr erlangt werden.

**3.** Verfahren nach einem der vorhergehenden Ansprüche, **dadurch gekennzeichnet, dass** es den Schritt des selektiven Übertragens von Sondiersignalen einschließlich der Impulssignale, die vom Endgerät (T) ausgehen, zum gegebenen Punkt (BS) beinhaltet, wobei die Sondiersignale verwendet werden, um aktualisierte Versionen der phasenkonjugierten Wellenformen auf fallweiser Basis zu generieren.

**4.** Verfahren nach einem der vorhergehenden Ansprüche, **dadurch gekennzeichnet, dass** das Endgerät (T) ein mobiles Endgerät ist.

**5.** Verfahren nach Anspruch 3 oder 4, **dadurch gekennzeichnet, dass** es die Schritte des Detektierens von Bewegung seitens des mobilen Endgeräts (T) und des Aktualisierens der phasenkonjugierten Wellenformen, wenn diese Bewegung eine gegebenen Schwellwert überschreitet, beinhaltet.

**6.** Verfahren nach einem der vorhergehenden Ansprüche, **dadurch gekennzeichnet, dass** es den Schritt des Detektierens der Wellenformen in den gegebenen Punkten mittels mehrerer Empfangselemente (101, ... , 10n) beinhaltet,

**7.** System zum Übertragen erster Digitalsignale von einem gegebenen Punkt (BS) zu einem Endgerät (T) in einem Kommunikationsnetz, wobei das Endgerät (T) fähig ist, Impulssignale zu generieren, wobei die Impulssignale einem Signal entsprechen, das vom Endgerät (T) verwendet wird, um mindestens einen der logischen Pegel, der zweiten Digitalsignalen zugeordnet ist, zum gegebenen Punkt (BS) zu übertragen, **dadurch gekennzeichnet, dass** es Folgendes beinhaltet:

- einen Empfänger (12) zum Empfangen der Impulssignale am gegebenen Punkt (BS),
- eine Analyseeinheit (22) zum Detektieren der Wellenformen, die durch den Empfänger (12), auf die Abstrahlung der Impulssignale durch das Endgerät (T) folgend, empfangen werden,
- eine Konjugationseinheit (24), welche die durch den Empfänger (12) detektierten Wellenformen Phasenkonjugation in derartiger Weise unterzieht, dass die zugeordneten phasenkonjugierten Wellenformen generiert werden, und
- eine Übertragungskette (16, 18) zum Übertragen vom gegebenen Punkt (BS) zum Endgerät (T), wobei die Übertragungskette (16, 18) konfiguriert ist, die phasenkonjugierten Wellenformen zur Übertragung der logischen Pegel des ersten Digitalsignals zu verwenden.

**8.** System nach Anspruch 7, **dadurch gekennzeichnet, dass** die Konjugationseinheit (24) die phasenkonjugierten Wellenformen ausgehend von den detektierten Wellenformen mittels Zeitumkehr generiert.

**9.** System nach einem der vorhergehenden Ansprüche, **dadurch gekennzeichnet, dass** das Endgerät (T) konfiguriert ist, um selektiv Sondiersignale einschließlich der Impulssignale zum gegebenen Punkt (BS) zu übertragen; wobei die Konjugationseinheit (24) die Sondiersignale verwendet, um aktualisierte Versionen der phasenkonjugierten Wellenformen auf fallweiser Basis zu generieren.

**10.** System nach einem der Ansprüche 7 bis 9, **dadurch gekennzeichnet, dass** das Endgerät (T) ein mobiles Endgerät ist.

**11.** System nach Anspruch 9 oder nach Anspruch 10, **dadurch gekennzeichnet, dass** das Endgerät (T) einem Bewegungssensor zugeordnet ist, um Bewegung des Endgeräts (T) zu detektieren, und konfiguriert ist, die Sondiersignale zu übertragen, wenn diese Bewegung einen gegebenen Schwellwert überschreitet.

**12.** System nach einem der Ansprüche 7 bis 11, **dadurch gekennzeichnet, dass** der Empfänger (12) mehrere Empfangselemente (101, ... , 10n) zum Detektieren der empfangenen Wellenform unter Erhaltung der Raumzeitdaten bezüglich ihrer Ausbreitung beinhaltet.

**Revendications**

**1.** Procédé pour transmettre des premiers signaux numériques d'un point donné (BS) à un terminal (T) d'un réseau de communication, **caractérisé en ce qu'**il comprend les étapes consistant à :

- produire sélectivement des signaux à impulsions commençant à partir dudit terminal (T), lesdits signaux à impulsions correspondant à un signal utilisé par ledit terminal (T) pour transmettre au moins un des niveaux logiques associés à des seconds signaux numériques audit point donné (BS),
- détecter les formes d'onde reçues audit point donné (BS) suivant l'émission desdits signaux à impulsions,
- soumettre les formes d'onde ainsi détectées à une conjugaison de phase de manière telle à produire des formes d'onde associées ayant subi une conjugaison de phase, et
- utiliser lesdites formes d'onde ayant subi une conjugaison de phase pour la transmission des niveaux logiques des premiers signaux numériques dudit point donné (BS) audit terminal (T).

**2.** Procédé selon la revendication 1, **caractérisé en ce que** lesdites formes d'onde ayant subi une conjugaison de phase sont obtenues en commençant à partir desdites formes d'onde détectées par l'intermédiaire d'une inversion temporelle.

**3.** Procédé selon une quelconque des revendications précédentes, **caractérisé en ce qu'**il comprend l'étape consistant à transmettre sélectivement des signaux de sonde comprenant lesdits signaux à impulsions en commençant à partir dudit terminal (T) audit point donné (BS), lesdits signaux de sonde étant utilisés pour produire des versions actualisées desdites formes d'onde ayant subi une conjugaison de phase au cas par cas.

**4.** Procédé selon une quelconque des revendications précédentes, **caractérisé en ce que** ledit terminal (T) est un terminal mobile.

**5.** Procédé selon la revendication 3 ou la revendication 4, **caractérisé en ce qu'**il comprend les étapes consistant à détecter un mouvement de la part dudit terminal mobile (T) et à actualiser lesdites formes d'onde ayant subi une conjugaison de phase lorsque ce mouvement dépasse un seuil donné.

**6.** Procédé selon une quelconque des revendications précédentes, **caractérisé en ce qu'**il comprend l'étape consistant à détecter lesdites formes d'onde dans lesdits points donnés au moyen d'une pluralité d'éléments de réception (101, ... , 10n).

**7.** Système pour transmettre des premiers signaux numériques d'un point donné (BS) à un terminal (T) dans un réseau de communication, dans lequel ledit terminal (T) est capable de produire des signaux à impulsions, lesdits signaux à impulsions correspondant à un signal utilisé par ledit terminal (T) pour transmettre au moins un des niveaux logiques associés à des seconds signaux numériques audit point donné (BS), **caractérisé en ce qu'**il comprend :

- un récepteur (12) destiné à recevoir lesdits signaux à impulsions audit point donné (BS),
- une unité d'analyse (22) destinée à détecter les formes d'onde reçues par ledit récepteur (12) suivant l'émission desdits signaux à impulsions par ledit terminal (T),
- une unité de conjugaison (24) qui soumet les formes d'onde détectées par ledit récepteur (12) à une conjugaison de phase de manière telle à produire les formes d'onde associées ayant subi une conjugaison de phase, et
- une chaîne de transmission (16, 18) pour transmettre dudit point donné (BS) audit terminal (T), ladite chaîne de transmission (16, 18) étant configurée pour utiliser lesdites formes d'onde ayant subi une conjugaison de phase pour la transmission des niveaux logiques des premiers signaux numériques.

**8.** Système selon la revendication 7, **caractérisé en ce que** ladite unité de conjugaison (24) produit lesdites formes d'onde ayant subi une conjugaison de phase en commençant à partir desdites formes d'onde détectées au moyen d'une inversion temporelle.

**9.** Système selon une quelconque des revendications précédentes, **caractérisé en ce que** ledit terminal (T) est configuré pour transmettre sélectivement des signaux de sonde comprenant lesdits signaux à impulsions audit point donné (BS), ladite unité de conjugaison (24) utilisant lesdits signaux de sonde pour produire des versions actualisées desdites formes d'onde ayant subi une conjugaison de phase au cas par cas.

**10.** Système selon une quelconque des revendications 7 à 9, **caractérisé en ce que** ledit terminal (T) est un terminal mobile.

**11.** Système selon la revendication 9 ou la revendication 10, **caractérisé en ce que** ledit terminal (T) est associé à un capteur de mouvement pour détecter un mouvement dudit terminal (T), et est configuré pour transmettre lesdits signaux de sonde lorsque ce mouvement dépasse un seuil donné.

**12.** Système selon une quelconque des revendications 7 à 11, **caractérisé en ce que** ledit récepteur (12) comprend une pluralité d'éléments de réception (101, ... , 10n) destinés à détecter lesdites formes d'onde reçues tout en maintenant des données d'espace-temps concernant leur propagation.

# Fig_1

MP

BS

T

Fig_2

Fig_3

Fig_4

# Fig_5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5926768 A

### Non-patent literature cited in the description

- **Robert A. Fisher.** Optical Phase Conjugation. Academic Press, 1983, 2, 11
- Laser Handbook. 1985, vol. 4, 342
- **M. Fink.** Time-reverse Acoustics. *Physics Today,* March 1997, vol. 50 (3